# EUROPÄISCHE PATENTSCHRIFT

(11) **EP 3 414 500 B1**
(45) Veröffentlichungstag und Bekanntmachung des Hinweises auf die Patenterteilung: **16.03.2022**
(21) Anmeldenummer: 17701122.8
(22) Anmeldetag: 23.01.2017
(51) Int. Cl.: F25D 23/06, F25D 25/02, F25D 27/00

(54) **HAUSHALTKÄLTEGERÄT UND VERFAHREN MIT EINEM HAUSHALTKÄLTEGERÄT**
HOUSEHOLD REFRIGERATION APPLIANCE AND PROCESS WITH A HOUSEHOLD REFRIGERATION APPLIANCE
APPAREIL MÉNAGER FRIGORIFIQUE ET PROCÉDÉ AVEC UN APPAREIL MÉNAGER FRIGORIFIQUE

(30) Priorität: 12.02.2016 DE 102016202189
(43) Veröffentlichungstag der Anmeldung: 19.12.2018
(73) Patentinhaber: BSH Hausgeräte GmbH, 81739 München (DE)
(72) Erfinder: KESSLER, Andreas, 81827 München (DE); KLEINLEIN, Philipp, 81371 München (DE); SACHON, Robert, 80469 München (DE); STAUD, Ralph, 81667 München (DE); TISCHER, Thomas, 85540 Haar (DE)
(86) Internationale Anmeldenummer: PCT/EP2017/051296
(87) Internationale Veröffentlichungsnummer: WO 2017/137238

(56) Entgegenhaltungen:
- DE-T2- 69 328 470
- DE-U1- 29 814 243
- GB-A- 2 313 040
- US-A- 3 212 836
- US-A- 5 403 083
- US-A- 5 454 638
- US-A1- 2003 020 387
- US-A1- 2004 062 031

## Beschreibung

Die Erfindung betrifft ein Haushaltskältegerät und ein Verfahren mit einem Haushaltskältegerät.

Aus dem Stand der Technik ist bereits ein Haushaltskältegerät mit Halteprofilen für Abstellplatten bekannt. Diese Halteprofile werden während einer Herstellung in einen Korpus eines Geräteinnengehäuses tiefgezogen, wobei für jede Abstellplatte zwei auf gegenüberliegenden Seitenwänden des Geräteinnengehäuses angeordnete Halteprofile vorgesehen sind, in welche die Abstellplatte einschiebbar ist. In einem eingeschobenen Zustand wird die Abstellplatte dann von den beiden ihr zugeordneten Halteprofilen in einer horizontalen Lage auf einer bestimmten Höhe in einem Innenraum des Geräteinnengehäuses gehalten.

GB 2 313 040 A offenbart eine Fachbodenzusammenstellung, die an einer horizontalen Führungsschiene befestigt und horizontal verschieblich ist. Die Führungsschiene ist an der Rückwand eines Kältegeräts angeordnet. Hierzu weist die Fachbodenzusammenstellung einen Stützschaft mit daran befestigten Rollen auf. Die Rollen sind in der Führungsschiene aufgenommen, so dass die Fachbodenzusammenstellung horizontal verschieblich gelagert ist. Zusätzlich weist die Fachbodenzusammenstellung ein vorstehendes Teil, welches sich an der Führungsschiene abstützt.

US 3,212,836 offenbart ein Kältegerät mit einer Serie von vertikal beabstandeten, horizontalen Stützgliedern, die an Wandmitteln angeordnet sind. Die Stützglieder sind in Gruppen angeordnet, wobei jede Gruppe einen einheitlichen Querschnitt aufweist. Ein freitragendes Mittel umfasst Stützgliedereingriffsmittel an einem inneren Ende zum Stützen des Stützglieds an einer gewünschten vertikalen Position, wobei das Stützgliedereingriffsmittel einen Hakenabschnitt umfasst, der zum Eingriff mit einem der Stützglieder vorgesehen ist.

DE 693 28 470 T2 offenbart eine Regalbaugruppe umfassend eine erste Regalschiene und eine zweite Regalschiene, wobei jede der ersten und der zweiten Regalschienen zueinander horizontal beabstandet und vertikal angeordnet sind und zwischen sich eine Spannweite bilden, und jede der ersten und zweiten vertikal ausgerichteten Regalschienen auch so gestaltet sind, dass sie selektiv einstellbar mit einer Anzahl von Haltearmen an einer von einer Anzahl von vertikal beabstandeten Stellen lösbar verbunden werden können, ein erstes ganzes Regalfach, welches sich über die Spannweite zwischen der ersten und der zweiten Regalschiene erstreckt, wobei das Regalfach so gestaltet ist, dass es sich in lösbarer Halteverbindung mit der ersten und der zweiten Regalschiene über die Haltearme gekoppelt ist. eine Regaltraverse, welche sich über die Spannweite zwischen der ersten und der zweiten Regalschiene erstreckt, wobei die Regaltraverse so gestaltet ist, dass sie in lösbarer Halteverbindung mit der ersten und der zweiten Regalschiene gekoppelt ist, und ein partielles Regalfach, das sich über weniger als die gesamte Spannweite zwischen der ersten und der zweiten Regalschiene erstreckt, wobei das partielle Regalfach so gestaltet ist, dass es an der Regaltraverse an einer von einer Mehrzahl von Positionen entlang der Regaltraverse angeordnet werden kann.

DE 298 14 243 U1 offenbart ein Kühlgerät mit einem Kühlraum, der eine Innenbeleuchtung aufweist, wobei die Innenbeleuchtung aus einer Leuchtdiode besteht. Die Leuchtdiode ist entweder an der Decke des Kühlgeräts oder an einer Wandung zwischen zwei Führungen angeordnet, wobei eine Glasplatte zwischen diese Führungen eingeschoben werden kann.US 2004/0062031 A1 offenbart einen Fachboden, an dessen Seitenkante eine Lichtquelle angeordnet ist und innerhalb des Fachbodens prismatische Strukturen angeordnet sind, um das Licht der Lichtquelle umzulenken und zu verteilen.

Die Aufgabe der Erfindung besteht insbesondere darin, eine gattungsgemäße Vorrichtung mit verbesserten Eigenschaften hinsichtlich einer Halterung von Ablageeinheiten eines Haushaltsgeräts bereitzustellen. Die Aufgabe wird durch die kennzeichnenden Merkmale der unabhängigen Patentansprüche gelöst, während vorteilhafte Ausgestaltungen und Weiterbildungen der Erfindung den Unteransprüchen entnommen werden können.

Erfindungsgemäß ist ein Haushaltskältegerät vorgesehen, mit zumindest einer Ablageeinheit und mit zumindest einer Halteeinheit, die in zumindest einem Betriebszustand, in welchem sich die Ablageeinheit vollständig in einem Gerätekorpus befindet, zu einem Halten der Ablageeinheit vorgesehen ist.

Erfindungsgemäß ist vorgesehen, dass die Halteeinheit in dem Betriebszustand zu einem Halten der Ablageeinheit höchstens in einem Randbereich der Ablageeinheit vorgesehen ist, dessen Erstreckung in zumindest einer Richtung senkrecht zu einer Richtung eines beim Halten auftretenden Drehmoments maximal 30 %, insbesondere maximal 20 %, vorzugsweise maximal 15 %, vorteilhaft maximal 10 % und besonders vorteilhaft maximal 6 % der Erstreckung der Ablageeinheit entlang dieser Richtung entspricht.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Randbereich" eines Objekts soll insbesondere ein Bereich verstanden werden, welcher, ausgehend von einer an zumindest einem Ende des Objekts anliegenden Ebene, welche das Objekt höchstens berührt, bis zu einer zweiten, zur ersten Ebene parallelen zweiten Ebene, welche das Objekt schneidet, der Form des Objekts folgt, und auf einer Seite von der zweiten Ebene begrenzt ist. Unter einer "Erstreckung" eines Elements soll in diesem Zusammenhang insbesondere ein maximaler Abstand zweier Punkte einer senkrechten Projektion des Elements auf eine Ebene verstanden werden.

Unter einem "beim Halten auftretenden Drehmoment" soll insbesondere ein effektives Drehmoment verstanden werden, welches insbesondere durch das Halten der Ablageeinheit entlang einer Achse, welche vom Schwerpunkt der Ablageeinheit beabstandet ist, auftritt. Insbesondere entspricht das effektive Drehmoment dem vektoriellen Kreuzprodukt aus der Summe der Gewichtskraft der Ablageeinheit und etwaiger auf der Ablageeinheit abgestellter oder abgelegter Gegenstände und einem Richtungsvektor, der von der Achse zu einem gemeinsamen Schwerpunkt der Ablageeinheit und der etwaigen Gegenstände weist. Vorzugsweise verläuft das effektive Drehmoment zumindest im Wesentlichen parallel zu einer Seite der Ablageeinheit. Insbesondere verläuft die zumindest eine Richtung, die senkrecht zu der Richtung des beim Halten auftretenden Drehmoments steht, parallel zu einer Haupterstreckungsebene der Ablageeinheit. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts beträgt. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Unter einer "Haushaltsgerätevorrichtung" soll insbesondere ein, insbesondere funktionstüchtiger, Bestandteil, insbesondere eine Konstruktions- und/oder Funktionskomponente, eines Haushaltsgeräts, insbesondere eines Haushaltskältegeräts, verstanden werden. Insbesondere kann die Haushaltsgerätevorrichtung auch das gesamte Haushaltsgerät, insbesondere das gesamte Haushaltskältegerät, umfassen. Besonders bevorzugt ist ein als Haushaltskältegerät ausgebildetes Haushaltsgerät als Kühl- und/oder Gefriergerät, wie insbesondere als Kühlschrank, Kühltruhe, Gefrierschrank, Gefriertruhe, Kühlgefrierkombination und/oder Weinlagerschrank ausgebildet. Unter einer "Ablageeinheit" soll insbesondere eine Einheit verstanden werden, die zu einem Abstellen oder Ablegen von Gegenständen, insbesondere von Lebensmitteln, vorgesehen ist. Insbesondere kann die Ablageeinheit zumindest im Wesentlichen plattenartig ausgebildet sein und/oder zumindest ein zumindest im Wesentlichen plattenartig ausgebildetes Element aufweisen, und insbesondere zu einem Abstellen oder Ablegen von Gegenständen, insbesondere von Lebensmitteln, in einem plattenartig ausgebildeten Bereich vorgesehen sein. Unter einem "plattenartigen" Objekt soll dabei insbesondere ein Objekt verstanden werden, das entlang einer ersten Raumrichtung und entlang einer zweiten Raumrichtung eine erheblich größere Erstreckung aufweist als entlang einer dritten Raumrichtung, vorzugsweise eine um mindestens einen Faktor 5, vorteilhaft eine um mindestens einen Faktor 10 und besonders vorteilhaft mindestens um einen Faktor 20 größere Erstreckung, wobei die drei Raumrichtungen paarweise senkrecht aufeinander stehen sollen.

Unter einem "Gerätekorpus" soll insbesondere eine Einheit verstanden werden, die in wenigstens einem montierten Zustand einen Teil, insbesondere einen Großteil, einer äußeren Begrenzung, insbesondere eines Gehäuses, vorteilhaft eines Haushaltsgeräts, vorzugsweise eines Haushaltskältegeräts, ausbildet und die in dem montierten Zustand einen Teil, insbesondere einen Großteil, einer äußeren Begrenzung zumindest eines Innenraums, bevorzugt eines Kälteraums und besonders bevorzugt eines Kühlraums und/oder eines Gefrierraums, definiert. Vorteilhaft weist der Gerätekorpus an einer Seite eine Öffnung auf. Besonders vorteilhaft umschließt der Gerätekorpus den Innenraum an einer Oberseite, an einer Unterseite, an zwei gegenüberliegenden Seiten, sowie an einer Rückseite, wobei insbesondere eine Vorderseite offen verbleibt. Insbesondere ist eine an der Vorderseite angeordnete Tür vom Gerätekorpus verschieden.

Durch die erfindungsgemäße Ausgestaltung kann insbesondere eine vorteilhafte Halterung von Ablageeinheiten einer Haushaltsgerätevorrichtung, insbesondere eines Haushaltskältegeräts, erreicht werden. Insbesondere können Ablageeinheiten in einem Haushaltsgerätekorpus mit überwiegend ebenen inneren Wänden angeordnet werden, wodurch insbesondere die Wände leicht zu reinigen sind. Weiterhin können vorteilhaft die Ablageeinheiten leicht gereinigt werden, insbesondere an außerhalb des Randbereichs liegenden Rändern. Vorteilhaft können verschieden ausgebildete Ablageeinheiten, wie insbesondere Abstellplatten oder Flaschenablagen, lediglich einseitig gehalten in einem Haushaltsgerät angeordnet werden. Damit kann insbesondere ein einheitliches Erscheinungsbild einer Innenraumgestaltung erzielt werden. Zudem können vorteilhaft Ablageeinheiten aus verschiedenen Materialien in analoger Weise gehalten werden. Insbesondere vorteilhaft wirkt eine erfindungsgemäße Ausgestaltung optisch sehr großzügig. Zudem wird vorteilhaft ein modernes attraktives Design erzielt, insbesondere ein frameless Design.

Vorteilhaft umfasst die Haushaltsgerätevorrichtung den Gerätekorpus, in welchem die Halteeinheit angeordnet ist. Insbesondere ist die Halteeinheit mit dem Gerätekorpus verbunden, insbesondere einstückig verbunden, vorteilhaft mit einer Wand des Gerätekorpus. Vorteilhaft ist die Halteeinheit mit zumindest einer Halteschiene verbunden, die dazu vorgesehen ist, eine beim Halten auftretende Kraft und/oder ein beim Halten auftretendes Drehmoment zumindest teilweise aufzunehmen. Besonders vorteilhaft ist die Halteeinheit an der zumindest einen Halteschiene höhenverstellbar befestigt. Insbesondere ist die zumindest eine Halteschiene an dem Gerätekorpus befestigt. Vorteilhaft ist die Halteschiene an einer Wand des Gerätekorpus befestigt. Es ist aber auch denkbar, dass die Halteeinheit mit einer in den Gerätekorpus eingestellten Rahmeneinheit verbunden ist, welche sich in zumindest einem Betriebszustand vollständig im Innenraum befindet. Hierdurch kann vorteilhaft eine Vielzahl von Anordnungen der Halteeinheit im Gerätekorpus erreicht werden. Ferner kann eine geschützte Anordnung der Halteeinheit bereitgestellt werden.

Ferner ist die Halteeinheit in einem hinteren Bereich des Gerätekorpus angeordnet, insbesondere befestigt. Unter einem "hinteren Bereich" ist dabei insbesondere ein Bereich vor einer der Tür abgewandten Seite des Innenraums zu verstehen, insbesondere ein Bereich vor einer Rückwand des Gerätekorpus. Insbesondere erstreckt sich der Bereich auf eine hintere Hälfte des Innenraums, vorteilhaft auf ein hinteres Drittel des Innenraums, besonders vorteilhaft auf ein hinteres Viertel des Innenraums. Darunter dass "die Halteeinheit in einem hinteren Bereich des Gerätekorpus angeordnet ist" soll insbesondere verstanden werden, dass sich die Halteeinheit in einem montierten Zustand vollständig in dem hinteren Bereich befindet. Vorteilhaft ist die Halteeinheit an der Rückwand des Gerätekorpus angeordnet, insbesondere befestigt. Es ist aber auch denkbar, dass die Halteeinheit an zumindest einer Seitenwand des Gerätekorpus angeordnet, insbesondere befestigt, ist. Hierdurch kann vorteilhaft eine Aufhängung der Halteeinheit in einem Bereich, der einem Haushaltsgerätebenutzer abgewandt ist, erreicht werden. Insbesondere ist die Halteeinheit für den Haushaltsgerätebenutzer nicht unmittelbar sichtbar. Hierdurch kann insbesondere ein Eindruck einer schwebenden Ablageeinheit erzeugt werden. Ferner kann eine Zugänglichkeit verbessert werden.

Erfindungsgemäß ist vorgesehen, dass die Halteeinheit zumindest ein Halteprofil mit wenigstens einer Halteausnehmung aufweist, in welche zumindest ein Teil des Randbereichs einsteckbar ist. Das Halteprofil kann dabei insbesondere einen zumindest im Wesentlichen konstanten Querschnitt aufweisen. Insbesondere kann das Halteprofil ein durch Extrusion herstellbareres Element sein. Vorteilhaft ist das Halteprofil ein Stranggussprofil. Es ist aber auch denkbar, dass das Halteprofil ein aus einem Blech herstellbares Element ist. Insbesondere kann das Halteprofil derart geformt sein, dass es eine Halteausnehmung aufweist. Vorteilhaft verläuft eine Haupterstreckungsrichtung der Halteausnehmung zumindest im Wesentlichen parallel zu einer Haupterstreckungsrichtung des Halteprofils. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Darunter, dass zumindest ein Teil des Randbereichs in die Halteausnehmung "einsteckbar" ist, soll insbesondere verstanden werden, dass in einem eingesteckten Zustand zumindest ein Teil des Randbereichs formschlüssig mit zumindest einem Teil des Halteprofils verbunden ist. Vorteilhaft ist zumindest ein Teil des Randbereichs werkzeuglos in die Halteausnehmung einsteckbar. Besonders vorteilhaft ist zumindest ein Teil des Randbereichs durch eine lineare Bewegung und/oder eine Kippbewegung der Ablageeinheit relativ zur Halteeinheit in die Halteausnehmung einsteckbar.

Hierdurch kann vorteilhaft ein sicheres Halten der Ablageeinheit erzielt werden. Insbesondere kann vorteilhaft ein einfacher Ein- und/oder Ausbau der Ablageeinheit erzielt werden.

In einer besonders bevorzugten Ausgestaltung der Erfindung wird vorgeschlagen, dass das Halteprofil zumindest ein oberes Halteelement und zumindest ein unteres Halteelement aufweist, welche die Halteausnehmung zumindest teilweise begrenzen, wobei das untere Halteelement eine größere Erstreckung entlang der Richtung aufweist als das obere Halteelement. Unter einem "Halteelement" soll dabei insbesondere ein Element verstanden werden, das zu einer zumindest teilweise formschlüssigen Verbindung mit dem Randbereich vorgesehen ist. Vorteilhaft ist das Halteelement dazu vorgesehen, zumindest einen Teil einer beim Halten auftretenden Haltekraft und/oder zumindest einen Teil des beim Halten auftretenden Drehmoments aufzunehmen. Insbesondere sind das obere und das untere Halteelement jeweils zumindest im Wesentlichen als Wand ausgeführt, an welcher beim Halten ein Teil des Randbereichs anliegt. Vorteilhaft bildet die Halteausnehmung eine Nut aus. Insbesondere sind das obere Halteelement und das untere Halteelement zumindest teilweise als gegenüberliegende Wände der Nut ausgebildet. Hierdurch kann vorteilhaft das Halteprofil baulich einfach realisiert werden. Insbesondere können vorteilhafte Eigenschaften hinsichtlich einer Aufnahme der Haltekräfte durch die Halteeinheit erzielt werden.

Zudem wird vorgeschlagen, dass eine Haupterstreckungsrichtung der Halteausnehmung zumindest im Wesentlichen in horizontaler Richtung verläuft. Unter "zumindest im Wesentlichen in horizontaler Richtung" soll dabei insbesondere eine Ausrichtung relativ zu einer Flächennormalen eines Untergrunds, insbesondere einer Erdoberfläche verstanden werden, wobei die Richtung gegenüber einer Richtung senkrecht zu der Flächennormalen des Untergrunds eine Abweichung insbesondere kleiner als 8°, vorteilhaft kleiner als 5° und besonders vorteilhaft kleiner als 2° aufweist. Hierdurch kann vorteilhaft eine statisch günstige Ausrichtung der Halteausnehmung erreicht werden. Insbesondere kann hierdurch eine Ausrichtung der Ablageeinheit parallel zum Untergrund erzielt werden. Vorteilhaft kann hierdurch ein Rutschen von Gegenständen auf der Ablageeinheit vermieden werden.

Ferner wird vorgeschlagen, dass eine Haupterstreckungsrichtung der Halteausnehmung zumindest im Wesentlichen parallel zu einer Haupterstreckungsrichtung der Halteeinheit verläuft. Hierdurch können vorteilhaft auftretende Kräfte gleichmäßig auf der Halteeinheit verteilt werden. Insbesondere kann damit eine einfach herzustellende Halteeinheit für ein sicheres Halten realisiert werden.

Vorteilhaft erstreckt sich das Halteprofil über zu wenigstens einem Großteil einer Erstreckung der Halteeinheit in einer Haupterstreckungsrichtung der Halteeinheit. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Hierdurch kann vorteilhaft ein einheitliches Erscheinungsbild der Halteeinheit erzielt werden. Insbesondere kann hierdurch eine verfahrenstechnisch günstige Herstellung der Halteeinheit ermöglicht werden, beispielsweise durch Extrusion und/oder durch Strangpressen.

Erfindungsgemäß wird vorgeschlagen, dass die Ablageeinheit eine Abstellplatte aufweist und als eine solche ausgebildet ist. Unter einer "Abstellplatte" soll dabei insbesondere ein plattenartiges Element verstanden werden, welches zu einem Abstellen oder Ablegen von Gegenständen, insbesondere von Lebensmitteln, vorgesehen ist Hierdurch kann vorteilhaft ein sicheres Abstellen von Gegenständen, insbesondere Lebensmitteln, auf der Ablageeinheit erreicht werden. Insbesondere ist hierdurch vorteilhaft die Ablageeinheit leicht zu reinigen.

Erfindungsgemäß wird vorgeschlagen, dass die Abstellplatte zumindest teilweise und vorzugsweise vollständig transparent und rahmenlos und/oder zumindest teilweise und vorzugsweise vollständig transluzent und rahmenlos ausgebildet ist. Unter zumindest teilweise "transparent" soll dabei insbesondere zumindest teilweise transparent für sichtbares Licht verstanden werden, insbesondere eine Transparenz von zumindest 5 %, bevorzugt von zumindest 10 %, besonders bevorzugt von zumindest 20 %, vorteilhaft von zumindest 50 % und besonders vorteilhaft von zumindest 80 %, wobei ein transmittiertes Licht zumindest im Wesentlichen parallel zu einem einfallenden Licht ist. Unter zumindest teilweise "transluzent" soll dabei insbesondere zumindest teilweise transluzent für sichtbares Licht verstanden werden, insbesondere eine Durchlässigkeit von zumindest 5%, bevorzugt von zumindest 10%, besonders bevorzugt von zumindest 20 %, vorteilhaft von zumindest 50 % und besonders vorteilhaft von zumindest 80 % für ein einfallendes Licht, wobei ein austretendes Licht zumindest im Wesentlichen unter einem von 0 verschiedenen Winkel relativ zu dem einfallenden Licht gestreut wird. Unter "rahmenlos" soll dabei insbesondere verstanden werden, dass die Abstellplatte zu ihren Rändern hin aus demselben Material geformt ist wie an ihren Rändern. Insbesondere weist die Abstellplatte dabei zu ihren Rändern hin denselben Querschnitt auf wie an ihren Rändern. Insbesondere ist die Abstellplatte aus Glas, vorteilhaft aus Sicherheitsglas ausgebildet. Insbesondere kann die Abstellplatte aus zumindest teilweise trübem Glas, insbesondere Milchglas ausgebildet sein. Vorteilhaft ist die Abstellplatte als rahmenlose Glasplatte ausgebildet. Es ist aber auch denkbar, dass die Abstellplatte aus einem Kunststoff gefertigt ist. Hierdurch können vorteilhaft unter der Abstellplatte befindliche Gegenstände durch die Abstellplatte sichtbar sein. Insbesondere kann dadurch ein Bedienkomfort erhöht werden.

In einer besonders bevorzugten Ausgestaltung der Erfindung wird vorgeschlagen, dass die Halteeinheit zumindest eine Lichtquelle aufweist, die dazu vorgesehen ist, Licht an zumindest einer Stelle des Randbereichs in die Ablageeinheit einzukoppeln. Vorteilhaft handelt es sich um eine Lichtquelle für sichtbares Licht. Es ist aber auch denkbar, dass es sich um eine Lichtquelle für ultraviolettes und/oder infrarotes Licht handelt. Insbesondere weist die Lichtquelle dabei zumindest eine Glühbirne, vorzugsweise eine Reihe von Glühbirnen, und/oder vorzugsweise zumindest eine LED, vorzugsweise eine Reihe von LEDs, und/oder eine Leuchtstoffröhre auf. Insbesondere ist die Lichtquelle entlang der Haupterstreckungsrichtung der Halteeinheit ausgedehnt. Vorteilhaft ist die Lichtquelle in der Halteausnehmung angeordnet. Besonders vorteilhaft erstreckt sich die ausgedehnte Lichtquelle über wenigstens einen Großteil der Länge der Halteausnehmung in einer Richtung parallel zu einer Haupterstreckungsrichtung der Halteausnehmung. Insbesondere weist die Halteeinheit zumindest eine Sensoreinheit auf, die zu einer Erkennung der Ablageeinheit vorgesehen ist. Vorteilhaft kann zwischen einem Zustand, in welchem in die Halteeinheit eine Ablageeinheit eingesteckt ist und einem Zustand, in welchem in die Halteeinheit keine Ablageeinheit eingesteckt ist, unterschieden werden. Hierdurch kann vorteilhaft eine Beleuchtung der Ablageeinheit erzielt werden. Zudem kann vorteilhaft eine einfache Beleuchtung von Glasplatten erzielt werden. Insbesondere ist die Lichtquelle selbst für den Haushaltsgerätebenutzer nicht direkt sichtbar, sodass ein Eindruck einer selbstleuchtenden Ablageeinheit erzielt werden kann. Insbesondere mit einer Lichtquelle für ultraviolettes Licht können hierdurch vorteilhaft Schwarzlichteffekte erzeugt werden.

Zudem wird vorgeschlagen, dass die Ablageeinheit zumindest ein Streuzentrum aufweist, das dazu vorgesehen ist, in die Ablageeinheit eingekoppeltes Licht zumindest teilweise auszukoppeln. Unter einem "Streuzentrum" soll insbesondere ein Objekt verstanden werden, an welchem ein einfallendes paralleles Licht, insbesondere sichtbares Licht, ultraviolettes Licht oder Licht aus dem Nahinfrarot, in verschiedene Richtungen derart gestreut wird, dass es sich bei dem gestreuten Licht um nichtparalleles Licht handelt, und an welchem einfallendes nichtparalleles Licht derart gestreut wird, dass es sich bei dem gestreuten Licht um nichtparalleles Licht handelt. Insbesondere erscheint ein Streuzentrum einem Beobachter dabei unter verschiedenen Beobachtungswinkeln in der Farbe des einfallenden Lichts. Insbesondere ist die Ablageeinheit im Bereich des Streuzentrums transluzent. Vorteilhaft kann das Streuzentrum als Innengravur ausgebildet sein, besonders vorteilhaft als Innengravur einer zumindest teilweise transparenten und/oder teilweise transluzenten Glasplatte oder einer zumindest teilweise transparenten und/oder teilweise transluzenten Kunststoffplatte. Hierdurch kann vorteilhaft eine gezielte Beleuchtung bestimmter Bereiche der Ablageeinheit erzielt werden. Insbesondere kann hierdurch eine einfache Beleuchtung von Ablageeinheiten bereitgestellt werden. Vorteilhaft kann hierdurch zumindest ein Rand der Ablageeinheit beleuchtet werden. Besonders vorteilhaft kann hierdurch zumindest ein Rand einer rahmenlosen Abstellplatte beleuchtet werden, insbesondere einer transparenten und/oder transluzenten Abstellplatte. Insbesondere kann hierdurch eine Gravur der Ablageeinheit beleuchtet werden, vorteilhaft eine Innengravur, besonders vorteilhaft ein graviertes Logo. Vorteilhaft kann somit eine leuchtende Grafik im Glas ermöglicht werden.

Ferner geht die Erfindung aus von einem Verfahren mit einem Haushaltskältegerät, mit zumindest einer Ablageeinheit, die in zumindest einem Betriebszustand, in welchem sich die Ablageeinheit vollständig in einem Gerätekorpus befindet, gehalten wird.

Erfindungsgemäß ist vorgesehen, dass die Ablageeinheit höchstens in einem Randbereich der Ablageeinheit gehalten wird, dessen Erstreckung in zumindest einer Richtung senkrecht zu einer Richtung eines beim Halten auftretenden Drehmoments maximal 30 %, insbesondere maximal 20 %, vorzugsweise maximal 15 %, vorteilhaft maximal 10 % und besonders vorteilhaft maximal 6 % der Erstreckung der Ablageeinheit entlang dieser Richtung entspricht. Durch die erfindungsgemäße Ausgestaltung kann insbesondere eine vorteilhafte Halterung von Ablageeinheiten einer Haushaltsgerätevorrichtung, insbesondere eines Haushaltskältegeräts, erreicht werden. Insbesondere können Ablageeinheiten in einem Haushaltsgerätekorpus mit überwiegend ebenen Wänden angeordnet werden, wodurch insbesondere die Wände leicht zu reinigen sind. Weiterhin vorteilhaft sind die Ablageeinheiten leicht zu reinigen, insbesondere an außerhalb des Randbereichs liegenden Rändern. Vorteilhaft können verschieden ausgebildete Ablageeinheiten wie insbesondere Abstellplatten oder Flaschenablagen lediglich einseitig gehalten in einem Haushaltsgerät angeordnet werden. Damit kann insbesondere ein einheitliches Erscheinungsbild einer Innenraumgestaltung erzielt werden. Zudem können vorteilhaft Ablageeinheiten aus verschiedenen Materialien in analoger Weise gehalten werden.

Die Haushaltsgerätevorrichtung soll hierbei nicht auf die oben beschriebene Anwendung und Ausführungsform beschränkt sein. Insbesondere kann die Haushaltsgerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Haushaltskältegerät mit einer Haushaltsgerätevorrichtung in einer schematischen Frontansicht,
- Fig. 2: die Haushaltsgerätevorrichtung mit einer Ablageeinheit und einer Halteeinheit, welche die Ablageeinheit entlang einer Seite in einem Randbereich hält, in einer perspektivischen Schnittdarstellung entlang einer Ebene II in Fig. 1,
- Fig. 3: die Haushaltsgerätevorrichtung in einer perspektivischen Schnittdarstellung entlang einer Ebene III in Fig. 1,
- Fig. 4: eine weitere Haushaltsgerätevorrichtung mit einer Halteeinheit mit einer Lichtquelle und mit einer Ablageeinheit mit einem eingravierten Logo in einer perspektivischen Schnittdarstellung entlang einer Ebene III in Fig. 1
- Fig. 5: eine weitere Haushaltsgerätevorrichtung mit einer weiteren alternativen Halteeinheit in einer perspektivischen Schnittdarstellung entlang einer Ebene III in Fig. 1

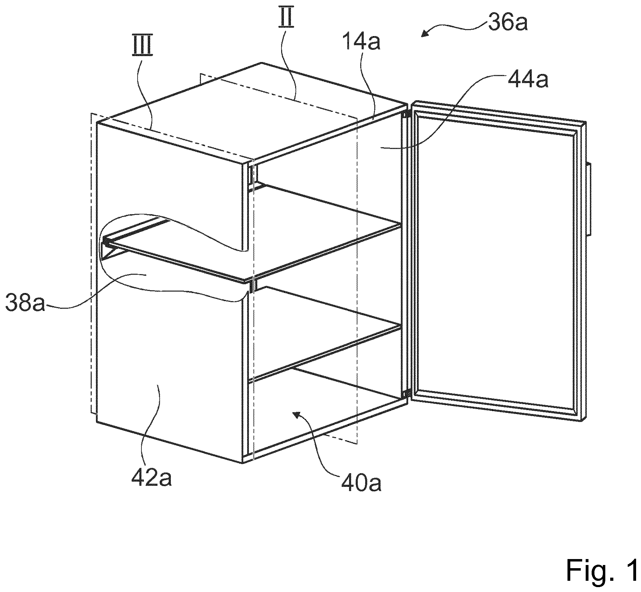

Figur 1 zeigt ein als Haushaltskältegerät ausgebildetes Haushaltsgerät 36a in einer schematischen Frontansicht. Das Haushaltsgerät 36a ist als ein Kühlschrank ausgebildet.

Das Haushaltsgerät 36a umfasst eine Haushaltsgerätevorrichtung. Im vorliegenden Fall ist die Haushaltsgerätevorrichtung dazu vorgesehen, Lebensmittel und Kühlgüter kühl zu lagern. Die Haushaltsgerätevorrichtung weist einen Gerätekorpus 14a mit Seitenwänden 42a, 44a und einer Rückwand 38a auf, der einen Innenraum 40a definiert.

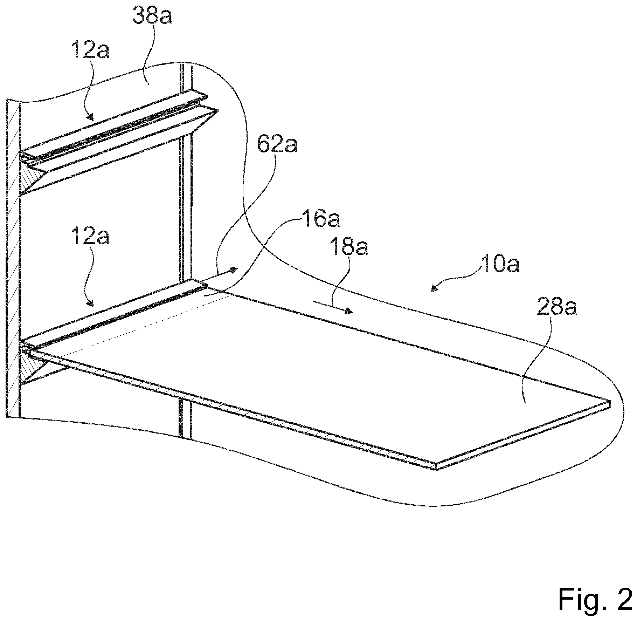

Figur 2 zeigt eine perspektivische Schnittdarstellung entlang einer Ebene II in Figur 1. Die Haushaltsgerätevorrichtung weist eine Ablageeinheit 10a sowie eine Halteeinheit 12a auf, welche in einem montierten Zustand die Ablageeinheit 10a in einem Randbereich 16a hält. Im vorliegenden Fall ist die Halteeinheit 12a an einer Rückwand 38a des Gerätekorpus 14a im Innenraum 40a angeordnet. Die Ablageeinheit 10a befindet sich im montierten Zustand vollständig im Innenraum 40a. Im vorliegenden Fall weist die Ablageeinheit 10a eine Abstellplatte 28a auf. Beim Halten der Ablageeinheit 10a tritt ein Drehmoment 62a auf, das zumindest im Wesentlichen parallel zu einer Haupterstreckungsrichtung der Halteeinheit 12a steht. Der Randbereich 16a erstreckt sich in zumindest einer Richtung 18a senkrecht zu dem Drehmoment über maximal 30 % der Länge der Ablageeinheit 10a in dieser Richtung 18a. Im vorliegenden Fall verläuft die Richtung 18a parallel zu einer Seitenkante der Abstellplatte 28a. Weiterhin beträgt im vorliegenden Fall die Erstreckung des Randbereichs 16a in der Richtung 18a etwa 6 % der Erstreckung der Ablageeinheit 10a in der Richtung 18a.

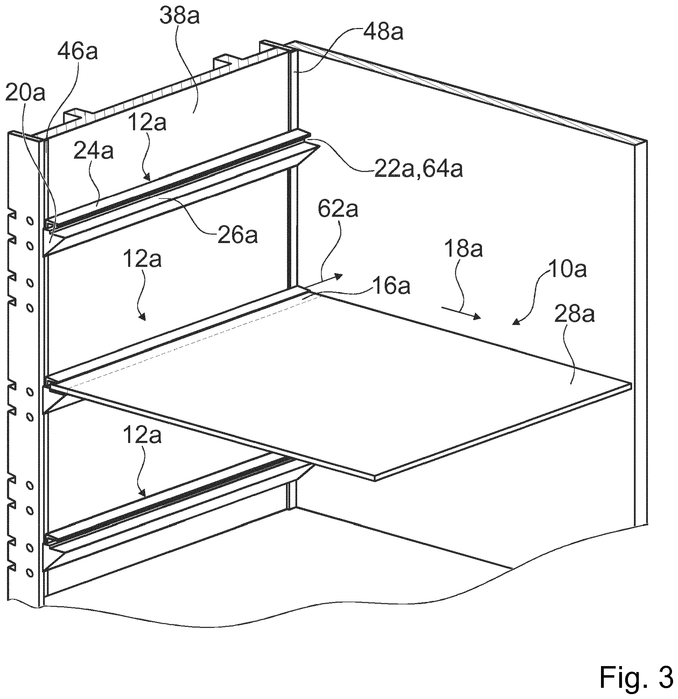

Figur 3 zeigt eine perspektivische Schnittdarstellung entlang einer Ebene III in Figur 1. Im vorliegenden Fall ist die Halteeinheit 12a an zwei vertikalen Schienen 46a, 48a der Haushaltsgerätevorrichtung befestigt, welche die Gewichtskraft der Ablageeinheit 10a und/oder das beim Halten im Randbereich 16a auftretende Drehmoment 62a zumindest teilweise aufnehmen können. Die Schienen 46a, 48a sind im vorliegenden Fall mit der Rückwand 38a des Gerätekorpus 14a verbunden. Die Halteeinheit 12a ist entlang der Schienen 46a, 48a höhenverstellbar.

Die Halteeinheit 12a weist ein Halteprofil 20a mit einer Halteausnehmung 22a auf, in welches zumindest ein Teil des Randbereichs 16a eingesteckt werden kann. Im vorliegenden Fall weist das Halteprofil 20a entlang seiner Haupterstreckungsrichtung einen zumindest im Wesentlichen konstanten Querschnitt auf. Weiterhin erstreckt sich das Halteprofil 20a über zumindest einen Großteil der Länge der Halteeinheit 12a. Die Halteausnehmung 22a weist ein oberes Halteelement 24a und ein unteres Halteelement 26a auf, welche die Halteausnehmung 22a zumindest teilweise begrenzen. Das untere Halteelement 26a weist eine größere Erstreckung entlang der Richtung 18a auf als das obere Halteelement 24a. Die Halteausnehmung 22a erstreckt sich dabei zumindest im Wesentlichen in horizontaler Richtung, parallel zu einem Untergrund (nicht gezeigt), auf welchem das Haushaltsgerät 36a steht. Weiterhin verläuft die Halteausnehmung 22a zumindest im Wesentlichen parallel zu einer Haupterstreckungsrichtung der Halteeinheit. Im vorliegenden Fall sind die Halteelemente 24a, 26a als Wände ausgebildet, die eine Nut 64a definieren. Die Nut 64a folgt in zumindest einem Bereich der Form des Randbereichs 16a, sodass die Ablageeinheit 10a in einem eingesteckten Zustand formschlüssig mit der Halteeinheit 12a verbunden ist. Die Ablageeinheit 10a liegt dabei auf dem unteren, in der Richtung 18a längeren Halteelement 26a auf und wird von dem oberen, in der Richtung 18a kürzeren Halteelement 24a von oben abgestützt.

Die Abstellplatte 28a ist erfindungsgemäß zumindest teilweise transparent und rahmenlos und/oder transluzent und rahmenlos ausgebildet. Im vorliegenden Fall ist die Abstellplatte 28a als eine rahmenlose Glasplatte ausgebildet. Die Abstellplatte 28a kann aber beispielsweise auch als eine rahmenlose Abstellplatte aus einem geeigneten durchsichtigen Kunststoff ausgebildet sein (nicht gezeigt).

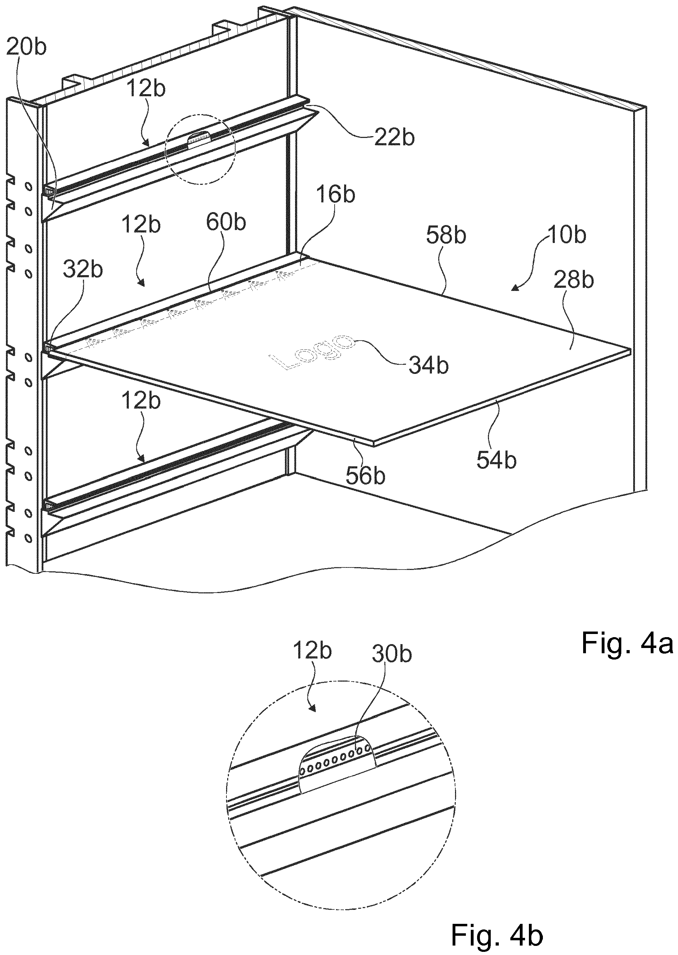

In der Figur 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt einen vertikalen Schnitt durch ein Haushaltsgerät 36b mit einer Haushaltsgerätevorrichtung. Eine Halteeinheit 12b weist eine Lichtquelle 30b auf. Die Lichtquelle 30b ist dazu vorgesehen, Licht an zumindest einer Stelle 32b eines Randbereichs 16b in eine Ablageeinheit 10b mit einer Abstellplatte 28b einzukoppeln. Im vorliegenden Fall weist die Lichtquelle 30b eine LED-Leiste auf, welche in einer Halteausnehmung 22b angeordnet ist und entlang der Haupterstreckungsrichtung eines Halteprofils 20b verläuft. Während eines Betriebs der Lichtquelle 30b wird Licht durch einen hinteren Rand 60b der Ablageeinheit 10b in die Ablageeinheit 10b eingekoppelt. Im vorliegenden Fall wird Licht durch den Rand der Abstellplatte 28b eingekoppelt und breitet sich in der Abstellplatte 28b zumindest im Wesentlichen in einer horizontalen Richtung aus, da eingekoppeltes Licht nach Art eines Lichtleiters an den Seiten der Abstellplatte 28b aufgrund einer im Vergleich zu einer Brechzahl einer Umgebung, insbesondere einer Luft, höheren Brechzahl eines Materials der Abstellplatte vornehmlich in die Abstellplatte 28b zurückreflektiert wird. Die Lichtquelle 30b kann dabei von einem Benutzer aktiviert oder deaktiviert werden und/oder die Halteeinheit 12b einen Sensor (nicht gezeigt) aufweisen, welcher erkennen kann, ob die Ablageeinheit 10b in die Halteeinheit 12b eingelegt ist, sodass entsprechend der Erkennung die entsprechende Lichtquelle 30b automatisch aktiviert oder deaktiviert wird. Die Lichtquelle 30b wird außerdem bei einem Schließen einer Tür (nicht gezeigt) des Haushaltsgeräts 36b deaktiviert und bei einem Öffnen der Tür in einen aktivierbaren Zustand versetzt.

Die Ablageeinheit 10b weist zumindest ein Streuzentrum 34b auf. Das Streuzentrum 34b ist dazu vorgesehen, in die Ablageeinheit 10b eingekoppeltes Licht zumindest teilweise auszukoppeln, insbesondere sichtbares Licht, ultraviolettes Licht und/oder Licht aus dem Nahinfraroten. Durch die Struktur des Materials der Ablageeinheit 10b im Bereich des Streuzentrums 34b wird durch die Ablageeinheit 10b geleitetes Licht bevorzugt im Bereich des Streuzentrums 34b ausgekoppelt, das heißt aus der Ablageeinheit 10b in die Umgebung gestreut. Im vorliegenden Fall weist die Abstellplatte 28b ein erstes Streuzentrum 34b auf, das als eine Innengravur der Abstellplatte 28b in Form eines Firmenlogos ausgebildet ist, welches durch das ausgekoppelte Licht zu einem Leuchten gebracht wird. Weiterhin sind im vorliegenden Fall ein vorderer Rand 54b sowie seitliche Ränder 56b, 58b weitere Streuzentren, sodass das an der Stelle des Randbereichs 32b eingekoppeltes Licht auch an diesen Rändern 54b, 56b, 58b ausgekoppelt wird, wodurch die Ränder 54b, 56b, 58b zu einem Leuchten gebracht werden.

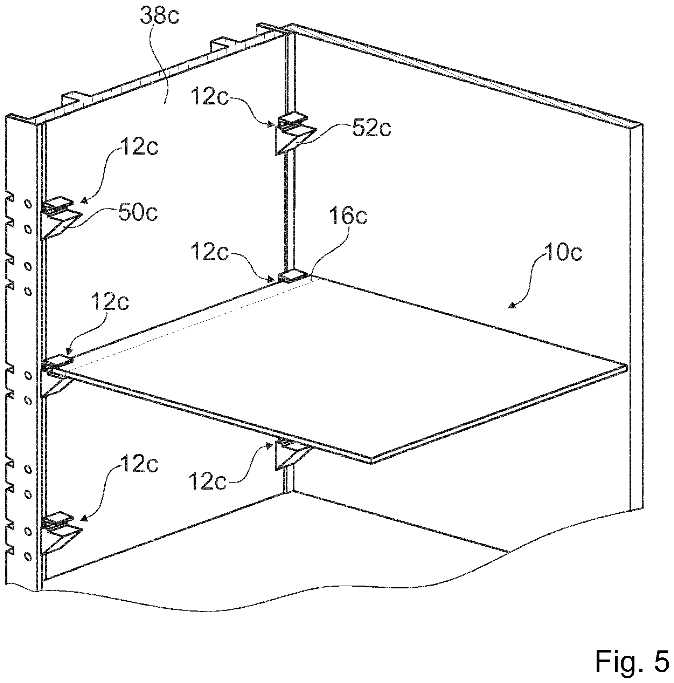

In der Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung der Ausführungsbeispiele der Figuren 1 bis 4 verwiesen werden kann. Zur Unterscheidung der Ausführungsbeispiele sind die Buchstaben a oder b in den Bezugszeichen der Ausführungsbeispiele in den Figuren 1 bis 4 durch den Buchstaben c in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der Ausführungsbeispiele der Figuren 1 bis 4 verwiesen werden.

Figur 5 zeigt ein weiteres Haushaltsgerät 36c mit einer Haushaltsgerätevorrichtung in einer perspektivischen Schnittdarstellung entlang einer Ebene III in Figur 1. Eine Halteeinheit 12c weist ein erstes Halteteil 50c und ein zweites Halteteil 52c auf. Im vorliegenden Fall weisen das Halteteil 50c und das Halteteil 52c zumindest im Wesentlichen identische Querschnitte auf und halten eine Ablageeinheit 10c an gegenüberliegenden Seiten eines Randbereichs 16c. Die Halteteile 50c, 52c sind dabei mit an einer Rückwand 38c eines Gerätekorpus 14c angeordneten Schienen 46c, 48c höhenverstellbar befestigt.

### Bezugszeichen

- 10: Ablageeinheit
- 12: Halteeinheit
- 14: Gerätekorpus
- 16: Randbereich
- 18: Richtung
- 20: Halteprofil
- 22: Halteausnehmung
- 24: Halteelement
- 26: Halteelement
- 28: Abstellplatte
- 30: Lichtquelle
- 32: Stelle des Randbereichs
- 34: Streuzentrum
- 36: Haushaltsgerät
- 38: Rückwand
- 40: Innenraum
- 42: Seitenwand
- 44: Seitenwand
- 46: Schiene
- 48: Schiene
- 50: Halteteil
- 52: Halteteil
- 54: Rand
- 56: Rand
- 58: Rand
- 60: Rand
- 62: Drehmoment
- 64: Nut

## Patentansprüche

1. Haushaltskältegerät mit zumindest einer Ablageeinheit (10a; 10b; 10c) und mit zumindest einer Halteeinheit (12a; 12b; 12c), die in zumindest einem Betriebszustand, in welchem sich die Ablageeinheit (10a; 10b; 10c) vollständig in einem Gerätekorpus (14a) befindet, zu einem Halten der Ablageeinheit (10a; 10b; 10c) vorgesehen ist, wobei die Halteeinheit (12a; 12b; 12c) in dem Betriebszustand zu einem Halten der Ablageeinheit (10a; 10b; 10c) höchstens in einem Randbereich (16a; 16b; 16c) der Ablageeinheit (10a; 10b; 10c) vorgesehen ist, dessen Erstreckung in zumindest einer Richtung (18a) senkrecht zu einer Richtung eines beim Halten auftretenden Drehmoments (62a) maximal 30 % der Erstreckung der Ablageeinheit (10a; 10b; 10c) entlang dieser Richtung (18a) entspricht, wobei die Halteeinheit (12a; 12b; 12c) in einem hinteren Bereich des Gerätekorpus (14a; 14b) angeordnet ist, wobei die Halteeinheit (12a; 12b; 12c) zumindest ein Halteprofil (20a; 20b) mit wenigstens einer Halteausnehmung (22a; 22b) aufweist, in welche zumindest ein Teil des Randbereichs (16a; 16b; 16c) einsteckbar ist, **dadurch gekennzeichnet, dass** die Ablageeinheit (10a; 10b; 10c) als Abstellplatte (28a; 28b) ausgebildet ist, und dass die Abstellplatte (28a; 28b) rahmenlos und zumindest teilweise transparent und/oder zumindest teilweise transluzent ausgebildet ist.

2. Haushaltskältegerät nach Anspruch 1, **gekennzeichnet durch** den Gerätekorpus (14a; 14b), in welchem die Halteeinheit (12a; 12b; 12c) angeordnet ist.

3. Haushaltskältegerät nach einem der Ansprüche 1 oder 2, **dadurch gekennzeichnet, dass** das Halteprofil (20a; 20b) zumindest ein oberes Halteelement (24a) und zumindest ein unteres Halteelement (26a) aufweist, welche die Halteausnehmung (22a; 22b) zumindest teilweise begrenzen, wobei das untere Halteelement (26a) eine größere Erstreckung entlang der Richtung (18a) aufweist als das obere Halteelement (24a).

4. Haushaltskältegerät nach einem der Ansprüche 1 bis 3, **dadurch gekennzeichnet, dass** eine Haupterstreckungsrichtung der Halteausnehmung (22a; 22b) zumindest im Wesentlichen in horizontaler Richtung verläuft.

5. Haushaltskältegerät nach einem der Ansprüche 1 bis 4, **dadurch gekennzeichnet, dass** eine Haupterstreckungsrichtung der Halteausnehmung (22a; 22b) zumindest im Wesentlichen parallel zu einer Haupterstreckungsrichtung der Halteeinheit (12a; 12b; 12c) verläuft.

6. Haushaltskältegerät nach einem der Ansprüche 1 bis 5, **dadurch gekennzeichnet, dass** sich das Halteprofil (20a; 20b) über zu wenigstens einen Großteil einer Erstreckung der Halteeinheit (12a; 12b; 12c) in einer Haupterstreckungsrichtung der Halteeinheit (12a; 12b; 12c) erstreckt.

7. Haushaltskältegerät nach einem der vorhergehenden Ansprüche, **dadurch gekennzeichnet, dass** die Halteeinheit (12a; 12b; 12c) zumindest eine Lichtquelle (30b) aufweist, die dazu vorgesehen ist, Licht an zumindest einer Stelle (32b) des Randbereichs (16a; 16b; 16c) in die Ablageeinheit (10a; 10b; 10c) einzukoppeln.

8. Haushaltskältegerät nach Anspruch 7, **dadurch gekennzeichnet, dass** die Ablageeinheit (10a; 10b; 10c) zumindest ein Streuzentrum (34b) aufweist, das dazu vorgesehen ist, in die Ablageeinheit (10a; 10b; 10c) eingekoppeltes Licht zumindest teilweise auszukoppeln.

9. Verfahren mit einem Haushaltskältegerät nach einem der Ansprüche 1 bis 8, mit zumindest einer Ablageeinheit (10a; 10b; 10c), die in zumindest einem Betriebszustand, in welchem sich die Ablageeinheit (10a; 10b; 10c) vollständig in einem Gerätekorpus (14a) befindet, gehalten wird, **dadurch gekennzeichnet, dass** die Ablageeinheit (10a; 10b; 10c) höchstens in einem Randbereich (16a; 16b; 16c) der Ablageeinheit (10a; 10b; 10c) gehalten wird, dessen Erstreckung in zumindest einer Richtung (18a) senkrecht zu einer Richtung (18a) eines beim Halten auftretenden Drehmoments (62a) maximal 30 % der Erstreckung der Ablageeinheit (10a; 10b; 10c) entlang dieser Richtung (18a) entspricht.

## Claims

1. Household refrigeration appliance with at least one storage unit (10a; 10b; 10c) and with at least one holding unit (12a; 12b; 12c), which is provided to hold the storage unit (10a; 10b; 10c) in at least one operating state, in which the storage unit (10a; 10b; 10c) is present in its entirety in an appliance carcass (14a), wherein in the operating state the holding unit (12a; 12b; 12c) is provided to hold the storage unit (10a; 10b; 10c) as a maximum in an edge region (16a; 16b; 16c) of the storage unit (10a; 10b; 10c), the extension of said edge region (16a; 16b; 16c) corresponding, in at least one direction (18a) perpendicular to a direction of a torque (62a) that results during holding, to maximum 30% of the extension of the storage unit (10a; 10b; 10c) along said direction (18a), wherein the holding unit (12a; 12b; 12c) is arranged in a rear region of the appliance carcass (14a; 14b), wherein the holding unit (12a; 12b; 12c) has at least one holding profile (20a; 20b) with at least one holding recess (22a; 22b), into which at least part of the edge region (16a; 16b; 16c) can be inserted, **characterised in that** the storage unit (10a; 10b; 10c) is embodied as a shelf (28a; 28b) and that the shelf (28a; 28b) is embodied to be frameless and at least partially transparent and/or at least partially translucent.

2. Household refrigeration appliance according to claim 1, **characterised by** the appliance carcass (14a; 14b), in which the holding unit (12a; 12b; 12c) is arranged.

3. Household refrigeration appliance according to one of claims 1 or 2, **characterised in that** the holding profile (20a; 20b) has at least one upper holding element (24a) and at least one lower holding element (26a), which at least partially delimit the holding recess (22a; 22b), wherein the lower holding element (26a) has a greater extension along the direction (18a) than the upper holding element (24a).

4. Household refrigeration appliance according to one of claims 1 to 3, **characterised in that** a main extension direction of the holding recess (22a; 22b) runs at least substantially in a horizontal direction.

5. Household refrigeration appliance according to one of claims 1 to 4, **characterised in that** a main extension direction of the holding recess (22a; 22b) runs at least substantially parallel to a main extension direction of the holding unit (12a; 12b; 12c).

6. Household refrigeration appliance according to one of claims 1 to 5, **characterised in that** the holding profile (20a; 20b) extends over at least a majority of an extension of the holding unit (12a; 12b; 12c) in a main extension direction of the holding unit (12a; 12b; 12c).

7. Household refrigeration appliance according to one of the preceding claims, **characterised in that** the holding unit (12a; 12b; 12c) has at least one light source (30b), which is provided to couple light into the storage unit (10a; 10b; 10c) at at least one point (32b) on the edge region (16a; 16b; 16c).

8. Household refrigeration appliance according to claim 7, **characterised in that** the storage unit (10a; 10b; 10c) has at least one diffusion centre (34b), which is provided to couple out at least some of the light coupled into the storage unit (10a; 10b; 10c).

9. Method with a household refrigeration appliance according to one of claims 1 to 8, with at least one storage unit (10a; 10b; 10c), which is held in at least one operating state, in which the storage unit (10a; 10b; 10c) is present in its entirety in an appliance carcass (14a), **characterised in that** the storage unit (10a; 10b; 10c) is held as a maximum in an edge region (16a; 16b; 16c) of the storage unit (10a; 10b; 10c), the extension of said edge region (16a; 16b; 16c) corresponding, in at least one direction (18a) perpendicular to a direction (18a) of a torque (62a) that results during holding, to maximum 30% of the extension of the storage unit (10a; 10b; 10c) along said direction (18a).

## Revendications

1. Appareil frigorifique à usage domestique comprenant au moins une unité de rangement (10a ; 10b ; 10c) et comprenant au moins une unité de maintien (12a ; 12b ; 12c) qui, dans au moins un état de fonctionnement dans lequel l'unité de rangement (10a ; 10b ; 10c) se trouve complètement dans un corps d'appareil (14a), est ménagée pour un maintien de l'unité de rangement (10a ; 10b ; 10c), dans lequel l'unité de maintien (12a ; 12b ; 12c) dans l'état de fonctionnement est ménagée pour un maintien de l'unité de rangement (10a ; 10b ; 10c) au maximum dans une zone de bord (16a ; 16b ; 16c) de l'unité de rangement (10a ; 10b ; 10c), dont l'étendue, dans au moins une direction (18a) perpendiculaire à une direction d'un couple (62a) se produisant lors du maintien, correspond au maximum à 30% de l'étendue de l'unité de rangement (10a ; 10b ; 10c) le long de cette direction (18a), dans lequel l'unité de maintien (12a ; 12b ; 12c) est disposée dans une zone arrière du corps d'appareil (14a ; 14b), dans lequel l'unité de maintien (12a ; 12b ; 12c) présente au moins un profilé de maintien (20a ; 20b) comprenant au moins un évidement de maintien (22a ; 22b) dans lequel au moins une partie de la zone de bord (16a ; 16b ; 16c) peut être emboîtée, **caractérisé en ce que** l'unité de rangement (10a ; 10b ; 10c) est réalisée comme tablette (28a ; 28b) et **en ce que** la tablette (28a ; 28b) est réalisée sans cadre et au moins en partie de manière transparente et/ou au moins en partie de manière translucide.

2. Appareil frigorifique à usage domestique selon la revendication 1, **caractérisé par** le corps d'appareil (14a ; 14b) dans lequel l'unité de maintien (12a ; 12b ; 12c) est disposée.

3. Appareil frigorifique à usage domestique selon l'une quelconque des revendications 1 ou 2, **caractérisé en ce que** le profilé de maintien (20a ; 20b) présente au moins un élément de maintien supérieur (24a) et au moins un élément de maintien inférieur (26a), lesquels délimitent au moins en partie l'évidement de maintien (22a ; 22b), dans lequel l'élément de maintien inférieur (26a) présente une étendue plus grande le long de la direction (18a) que l'élément de maintien supérieur (24a).

4. Appareil frigorifique à usage domestique selon l'une quelconque des revendications 1 à 3, **caractérisé en ce qu'**une direction d'étendue principale de l'évidement de maintien (22a ; 22b) s'étend au moins essentiellement en direction horizontale.

5. Appareil frigorifique à usage domestique selon l'une quelconque des revendications 1 à 4, **caractérisé en ce qu'**une direction d'étendue principale de l'évidement de maintien (22a ; 22b) s'étend au moins essentiellement parallèlement à une direction d'étendue principale de l'unité de maintien (12a ; 12b ; 12c).

6. Appareil frigorifique à usage domestique selon l'une quelconque des revendications 1 à 5, **caractérisé en ce que** le profilé de maintien (20a ; 20b) s'étend dans une direction d'étendue principale de l'unité de maintien (12a ; 12b ; 12c) sur au moins une grande partie d'une étendue de l'unité de maintien (12a ; 12b ; 12c).

7. Appareil frigorifique à usage domestique selon l'une quelconque des revendications précédentes, **caractérisé en ce que** l'unité de maintien (12a ; 12b ; 12c) présente au moins une source de lumière (30b) qui est ménagée pour injecter de la lumière dans l'unité de rangement (10a ; 10b ; 10c) à au moins un endroit (32b) de la zone de bord (16a ; 16b ; 16c).

8. Appareil frigorifique à usage domestique selon la revendication 7, **caractérisé en ce que** l'unité de rangement (10a ; 10b ; 10c) présente au moins un centre de diffusion (34b) qui est ménagé pour découpler au moins en partie la lumière injectée dans l'unité de rangement (10a ; 10b ; 10c),

9. Procédé avec un appareil frigorifique à usage domestique selon l'une quelconque des revendications 1 à 8, comprenant au moins une unité de rangement (10a ; 10b ; 10c) qui, dans au moins un état de fonctionnement dans lequel l'unité de rangement (10a ; 10b ; 10c) se trouve complètement dans un corps d'appareil (14a), est maintenue, **caractérisé en ce que** l'unité de rangement (10a ; 10b ; 10c) est maintenue au maximum dans une zone de bord (16a ; 16b ; 16c) de l'unité de rangement (10a ; 10b ; 10c), dont l'étendue, dans au moins une direction (18a) perpendiculaire à une direction (18a) d'un couple (62a) se produisant lors du maintien, correspond au maximum à 30% de l'étendue de l'unité de rangement (10a ; 10b ; 10c) le long de cette direction (18a).
